# EUROPÄISCHE PATENTSCHRIFT

(11) **EP 2 834 899 B1**
(45) Veröffentlichungstag und Bekanntmachung des Hinweises auf die Patenterteilung: **02.01.2019**
(21) Anmeldenummer: 13707864.8
(22) Anmeldetag: 05.03.2013
(51) Int. Cl.: H02J 50/60, H02J 50/12

(54) **DRAHTLOSE ENERGIEÜBERTRAGUNG**
WIRELESS ENERGY TRANSMISSION
TRANSMISSION D'ÉNERGIE SANS FIL

(30) Priorität: 05.04.2012 DE 102012205740
(43) Veröffentlichungstag der Anmeldung: 11.02.2015
(73) Patentinhaber: Robert Bosch GmbH, 70442 Stuttgart (DE)
(72) Erfinder: REJMAN, Marcin, 71332 Waiblingen (DE); LOHR, Guenter, 70771 Leinfelden-Echterdingen (DE); MACK, Juergen, 73035 Goeppingen (DE)
(86) Internationale Anmeldenummer: PCT/EP2013/054420
(87) Internationale Veröffentlichungsnummer: WO 2013/149778

(56) Entgegenhaltungen:
- DE-A1-102006 017 801
- US-A1- 2011 244 913
- US-A1- 2012 049 791
- US-B2- 8 004 118

## Beschreibung

Eine drahtlose Energieübertragung kann verwendet werden, um Energie von einem ersten Gerät induktiv an ein zweites Gerät zu übertragen. Das erste Gerät kann insbesondere ein Netzteil und das zweite Gerät ein elektrisches Kleingerät mit einer aufzuladenden Batterie bzw. einem Akkumulator umfassen. Um den Akkumulator aufzuladen, wird das elektrische Kleingerät in einen magnetischen Einflussbereich des Netzteils gebracht und die Energieübertragung wird gestartet.

Für die Energieübertragung können das Netzteil und das Kleingerät jeweils eine Spule umfassen, die magnetisch miteinander gekoppelt sind. Das Netzteil erzeugt mittels einer Sendespule ein magnetisches Wechselfeld, das seitens des Empfängers mittels dessen Empfangsspule in einen elektrischen Strom zurückgewandelt wird. Dieser Strom kann dann über einen Laderegler dem Akkumulator zugeführt werden.

Es kann vorkommen, dass ein magnetisierbares oder elektrisch leitfähiges Objekt in den magnetischen Einflussbereich der Sendespule gelangt und sich dort im magnetischen Wechselfeld aufgrund von Wirbelströmen oder Ummagnetisierungs- bzw. Hystereseverlusten erwärmt. Die Erwärmung kann beträchtlich sein, so dass von dem Objekt eine Unfallgefahr ausgehen kann.

US 8,004,118 B2 schlägt vor, anhand einer Signalform an der Sendespule zu bestimmen, ob außer der Sekundärspule noch ein Objekt im Bereich der Sendespule ist, und die Energieübertragung an die Sekundärspule erst dann zu beginnen, wenn kein Objekt erfasst werden kann.

US 2011/0244913 A1 betrifft ein Verfahren und eine Vorrichtung zur drahtlosen Energieübertragung.

DE 10 2006 017 801 A1 schlägt vor, eine drahtlose Energieübertragungsvorrichtung mit einer Einrichtung zu versehen, mit der ein Vorhandensein eines Fremdobjekts im Übertragungsbereich erfasst werden kann.

US 2012/0049791 A1 betrifft eine weitere drahtlose Energieübertragungseinrichtung.

Das Objekt kann erfasst werden, indem beispielsweise ein elektrischer Parameter an der Sendespule abgetastet und mit einem vorbestimmten Schwellenwert verglichen wird. Übersteigt der abgetastete Wert den Schwellenwert, so wird auf ein vorhandenes Objekt geschlossen und die drahtlose Energieübertragung beendet. Um auch ein kleines Objekt zuverlässig erfassen zu können, muss der Vergleich mit engen Toleranzen stattfinden. Dann besteht jedoch die Gefahr,
dass ein anderweitiger Einfluss auf den elektrischen Parameter, beispielsweise ein Alterungseffekt, eine Netzspannungsschwankung oder ein nur vorübergehend anwesendes Objekt, zu einer Beendigung der Energieübertragung führt. Insbesondere eine durch einen Benutzer unbeaufsichtigte Energieübertragung, wie sie zum Aufladen von Akkumulatoren verwendet werden kann, kann so ihren eigentlichen Zweck verfehlen.

Es ist daher Aufgabe der Erfindung, eine Vorrichtung und ein Verfahren bereitzustellen, die eine Unfallgefahr durch ein Objekt im Bereich der drahtlosen Energieübertragungsstrecke verringert und gleichzeitig eine zuverlässige Energieübertragung sicherstellt.

Diese Aufgabe wird gelöst mittels einer Vorrichtung,eines Verfahrens und eines Computerprogrammprodukts mit den Merkmalen der unabhängigen Ansprüche. Unteransprüche geben bevorzugte Ausführungsformen wieder.

Ein Sender zur drahtlosen Energieübertragung umfasst eine Sendeeinrichtung zur Erzeugung eines magnetischen Wechselfelds, eine Bestimmungseinrichtung zur Bereitstellung eines Signals, das auf ein Objekt im Bereich der Sendeeinrichtung hinweist, und eine Steuereinrichtung zur Begrenzung der Stärke des Wechselfelds in wenigstens drei verschiedenen Stufen auf der Basis des Signals.

Im Gegensatz zu einem bekannten Sender zur drahtlosen Energieübertragung kann die Stärke des Wechselfels an das Signal und damit an die Größe oder die magnetische Suszeptibilität des bestimmten Objekts angepasst werden. Dadurch kann eine absolute Erwärmung des Objekts in einem vorbestimmten Rahmen gehalten sein. Eine vorzeitige Beendigung der Energieübertragung kann so verhindert sein. Ein Energieübertragungsvorgang kann durch eine reduzierte Stärke des Magnetfelds zwar länger dauern, dafür aber das Ziel einer Übertragung einer vorbestimmten Energiemenge auch bei Anwesenheit des Objekts erfüllen.

Eine der Stufen kann der Stärke Null des Wechselfelds entsprechen. Bevorzugterweise wird das Wechselfeld nur dann in diese Stufe gesteuert, wenn das erfasste Objekt zu groß für einen sicheren Betrieb des Senders ist. Bei kleineren

Objekten kann eine verringerte Energieübertragung angesteuert werden. Dabei ist nach der Verringerung der Stärke des Magnetfelds auf einen Wert ungleich Null nicht nur eine weitere Energieübertragung sondern auch eine spätere Neubewertung des Objekts möglich, wenn beispielsweise der Einfluss des Objekts auf die Energieübertragung veränderlich ist, beispielsweise weil das Objekt nach einer Zeit aus dem magnetischen Einflussbereich entfernt wird. In diesem Fall kann das Wechselfeld auch wieder in einer stärkeren Stufe angesteuert werden.

In einer bevorzugten Ausführungsform weist das Signal auf eine durch das Objekt aufgenommene Energie hin. Das Signal kann insbesondere auf der Basis eines elektrischen Parameters an der Sendeeinrichtung bestimmbar sein. Dieser kann insbesondere ein durch die Sendeeinrichtung fließender Strom sein. Die Sendeeinrichtung kann eine Sendespule umfassen.

In einer anderen Ausführungsform, die mit der vorgenannten Ausführungsform kombinierbar ist, kann die Sendeeinrichtung einen Resonanztransformator umfassen und das Signal kann auf einen Gütefaktor des Resonanztransformators hinweisen. Der Resonanztransformator kann aus einer Serien- oder Parallelschaltung der Sendespule mit einer Resonanzkapazität gebildet sein. Der Gütefaktor kann anhand eines elektrischen Parameters am Resonanztransformator bestimmbar sein.

Es kann eine Speichereinrichtung vorgesehen sein, die dazu eingerichtet ist, Signalgrößen und ihnen zugeordnete Stärken des Wechselfelds aufzunehmen. Dadurch kann das Vorsehen einer Vielzahl unterschiedlicher Stärken des Wechselfelds erleichtert sein. Insbesondere kann durch die Speichereinrichtung eine nichtlineare Zuordnung zwischen der Größe des Signals und der Stärke des Wechselfelds erleichtert sein. In einer anderen Ausführungsform kann die Stärke des Wechselfelds auf der Basis der Größe des Signals auch anders, insbesondere parametrisch, bestimmt werden. Die parametrische Bestimmung kann ebenfalls in der Speichereinrichtung abgelegt sein. In beiden Fällen kann eine Vielzahl von Stufen unterstützt werden, wobei in einer Ausführungsform diese Zahl so groß ist, dass von einem nicht-diskreten (analogen) Zusammenhang gesprochen werden kann.

In einer Ausführungsform ist die Stärke des Wechselfelds durch eine magnetische Induktion bestimmt. Die magnetische Induktion kann insbesondere durch einen durch die Sendeeinrichtung fließenden Strom bestimmbar sein. Dadurch kann eine durch das Objekt aufgenommene Energie vorteilhaft bestimmbar sein.

In noch einer Ausführungsform ist die Steuereinrichtung dazu eingerichtet, eine elektrische Leistung der Sendeeinrichtung zu beschränken. Insbesondere können unterschiedlich starken Wechselfeldern unterschiedlich starke elektrische Leistungen zugeordnet sein. Eine vorbestimmte elektrische Leistung kann durch die Steuerung des Stroms oder der Spannung der Sendeeinrichtung mit geringem Aufwand beeinflussbar sein.

Ein Verfahren zum drahtlosen Übertragen von Energie umfasst Schritte des Bestimmens eines Signals, das auf ein Objekt im Bereich einer Sendeeinrichtung zur Erzeugung eines magnetischen Wechselfelds hinweist, und des Begrenzens der Stärke des Wechselfelds auf der Basis des Signals in wenigstens drei verschieden hohen Stufen.

In einer bevorzugten Ausführungsform können auch Schritte des Bestimmens eines Maximalwerts des Signals über einen vorbestimmten Zeitraum und des Ableitens von Schwellenwerten des Signals für die Stufen in Abhängigkeit vom Maximalwert des Signals umfasst sein. Dadurch kann durch den Sender eine selbstständige Kalibrierung durchgeführt werden, die langsame oder langfristige Einflüsse auf das Signal berücksichtigen kann. Insbesondere können dadurch Alterungseffekte von Bauteilen des Senders zur drahtlosen Energieübertragung kompensiert werden. Dadurch kann auch ein selbstlernender bzw. selbstkalibrierender Sender zur drahtlosen Energieübertragung bereitgestellt werden.

Ein Computerprogrammprodukt umfasst Programmcodemittel zur Durchführung des beschriebenen Verfahrens, wenn das Computerprogrammprodukt auf einer Verarbeitungseinrichtung abläuft oder auf einem computerlesbaren Datenträger gespeichert ist.

Die Erfindung wird nun mit Bezug auf die beigefügten Figuren genauer beschrieben, in denen:
- Figur 1: eine schematische Darstellung eines Systems zur drahtlosen Energieübertragung;
- Figur 2: beispielhafte Zusammenhänge zwischen einer Signalgröße und einer Stärke eines Wechselfelds am Sender aus Figur 1; und
- Figur 3: ein Ablaufdiagramm eines Verfahrens zur Steuerung des Senders aus Figur 1
darstellt.

### Genaue Beschreibung von Ausführungsformen

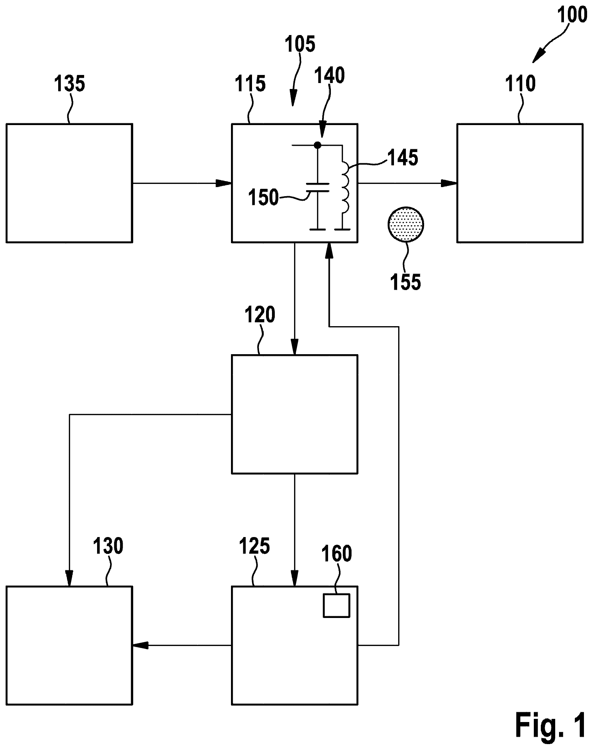

Figur 1 zeigt eine schematische Darstellung eines Systems 100 zur drahtlosen Energieübertragung. Das System 100 umfasst einen Sender 105 und einen Empfänger 110. Der Sender kann insbesondere ein Netzteil und der Empfänger 110 ein elektrisches Kleingerät, beispielsweise ein kabelloses Werkzeug wie einen Akkuschrauber, umfassen. In einer bevorzugten Ausführungsform umfasst der Empfänger 110 eine Empfangseinrichtung und einen elektrischen Verbraucher, wobei der elektrische Verbraucher einen Akkumulator und gegebenenfalls einen Laderegler umfasst.

Der Sender 105 umfasst eine Sendeeinrichtung 115, eine Bestimmungseinrichtung 120, eine Steuereinrichtung 125 sowie optional eine Anzeige 130. Der Sender 105 ist dazu eingerichtet, aus einer Energieversorgung 135 gespeist zu werden, die beispielsweise mit einem Energieversorgungsnetz verbunden sein kann.

Die Sendeeinrichtung 115 kann insbesondere einen Resonanztransformator 140 umfassen, der eine Sendespule 145 und eine Resonanzkapazität 150 umfasst, die seriell oder parallel miteinander verschaltet sind. Die Sendeeinrichtung 115 kann darüber hinaus eine Ansteuerung umfassen, um den Resonanztransformator 140 zum Schwingen anzuregen und mit Energie zu versorgen. Die Bestimmungseinrichtung 120 ist dazu eingerichtet, auf der Basis eines elektrischen Parameters der Sendeeinrichtung 115, insbesondere des Resonanztransformators 140, ein Signal zu bestimmen, das auf ein Objekt 155 hinweist, das sich möglicherweise in einem magnetischen Einflussbereich der Sendeeinrichtung 115 befindet.

Dabei ist die Stärke des bestimmten Signals bevorzugterweise abhängig von der durch das Objekt 155 aufgenommenen Leistung. Das Signal kann beispielsweise auf der Basis eines Stroms oder einer Spannung an der Sendeeinrichtung 115, insbesondere des Resonanztransformators 140, bestimmt werden. Alternativ kann das Signal auch auf der Basis eines Gütefaktors des Resonanztransformators 140 bestimmbar sein. Ist die Anzeige 130 vorgesehen, so kann das durch die Bestimmungseinrichtung 120 bereitgestellte Signal auf der Anzeige 130 dargestellt werden.

Die Steuereinrichtung 125 ist dazu eingerichtet, die Sendeeinrichtung 115 auf der Basis der Größe des durch die Bestimmungseinrichtung 120 bestimmten Signals in mehreren Stufen zu steuern. Dabei wird die Stärke des durch die Sendeeinrichtung 115 bereitgestellten Magnetfelds in Abhängigkeit der Signalstärke in wenigstens drei Stufen verändert, von denen eine Stufe einem Magnetfeld der Stärke Null entsprechen kann. Auf der Anzeige 130 kann die durch die Sendeeinrichtung 115 bereitgestellte Leistung dargestellt werden. In einer weiteren Ausführungsform umfasst die Anzeige 130 auch eine akustische Ausgabemöglichkeit, über welche die Steuerungseinrichtung 125 ein akustisches Signal ausgeben kann, wenn beispielsweise die Sendeeinrichtung 115 dazu angesteuert wird, das bereitgestellte magnetische Wechselfeld zu verringern.

Die Steuereinrichtung 125 kann eine Bewertung des Signals und insbesondere eine Zuordnung einer abgetasteten Signalstärke zu einer vorbestimmten Stärke des Magnetfelds der Sendeeinrichtung 115 durchführen. Zu diesem Zweck kann die Steuereinrichtung 125 eine Speichereinrichtung 160 umfassen, in der die Zuordnung oder eine Serie von Zuordnungen absolut, in Form von vorbestimmten Bereichen oder parametrisch abgelegt ist. Verschiedene Signale können auch in einem Fuzzy-Logic-Block verarbeitet werden.

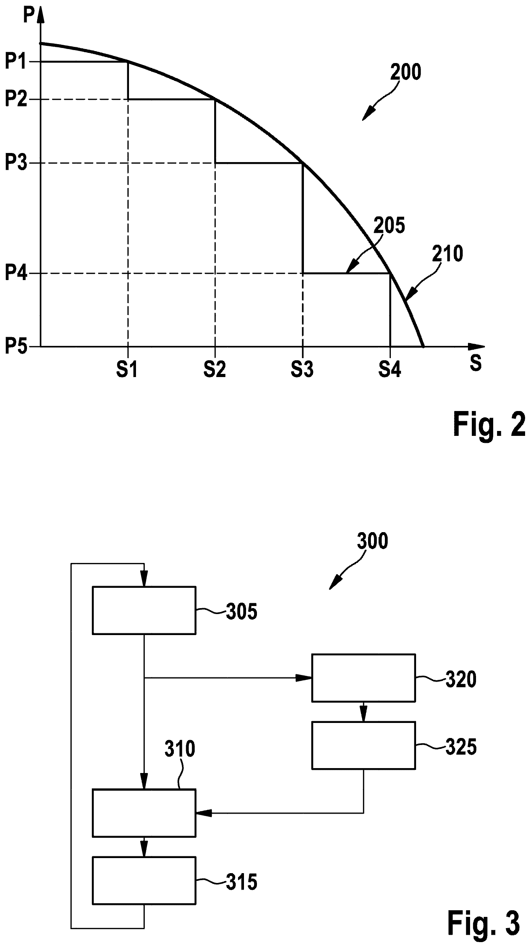

Figur 2 zeigt beispielhafte Zusammenhänge zwischen einer Signalgröße und einer Stärke eines Wechselfelds am Sender 105 aus Figur 1. Die dargestellten Zusammenhänge können insbesondere in der Speichereinrichtung 160 der Steuereinrichtung 125 des Senders 105 in Figur 1 abgelegt sein. Dargestellt sind ein erster Zusammenhang 205 und ein zweiter Zusammenhang 210. Beide Zusammenhänge 205 und 210 bilden jeweils ein horizontal dargestelltes Signal S auf eine vertikal dargestellte Stärke des Wechselfelds am Sender 105 ab.

Der erste Zusammenhang 205 ist diskret, indem er fünf verschiedene Stufen P1 bis P5 kennt. Ist das Signal S kleiner als der erste Schwellenwert S1, so ist die Stärke P des Magnetfelds nicht beschränkt bzw. durch die Bauart des Sendeeinrichtung 115 auf einen maximalen Wert von P1 festgelegt. Liegt das Signal S zwischen den Schwellenwerten S1 und S2, so ist die Stärke P auf einen Wert P2 begrenzt. Die Begrenzung kann beispielsweise durch eine Steuerung eines Signalverlaufs am Resonanztransformator 140 oder durch Steuern eines Stroms bzw. einer Spannung am Resonanztransformator 140 erfolgen. Die Stärke P2 ist eine Maximalstärke, sodass der Empfänger 110 auch nur so viel Leistung aus dem bereitgestellten magnetischen Wechselfeld entnehmen kann, dass die Stärke P2 nicht erreicht wird.

In entsprechender Weise kann das Magnetfeld auf die Stärke P3 beschränkt sein, wenn das Signal S zwischen den Schwellenwerten S2 und S3 liegt, oder auf die Stärke P4, falls das Signal zwischen den Schwellenwerten S3 und S4 liegt. Ist das Signal S größer als der Schwellenwert S4, so kann das Magnetfeld vollständig abgeschaltet werden, was einer Beschränkung auf die Stärke P5 = 0 entspricht.

Der dargestellte erste Zusammenhang 205 umfasst fünf Stufen, wobei ein Zusammenhang zwischen den Stufen und den zugeordneten Signalstärken im Mittel nicht linear ist. Es können auch mehr oder weniger Stufen verwendet werden. Entspricht eine der Stufen P dem Wert Null, so sollen noch wenigstens zwei weitere, verschieden große Stufen P vorgesehen sein.

Der zweite Zusammenhang 210 ist kontinuierlich (nicht-diskret) und kann beispielsweise durch eine lineare oder nichtlineare Funktion gegeben sein, die die Signalstärke S auf die Stärke P des Magnetfelds abbildet. In anderen Ausführungsformen kann auch beispielsweise ein polynomialer Zusammenhang zwischen der Signalstärke S und der Stärke P des Magnetfelds gegeben sein.

Figur 3 zeigt ein Ablaufdiagramm eines Verfahrens 300 zur Steuerung des Senders 105 im System 100 aus Figur 1. In einem ersten Schritt 305 wird die Stärke des Signals S bestimmt, das auf eine Leistung hinweist, welche das Objekt 155 aus einem magnetischen Einflussbereich der Sendeeinrichtung 115 des Senders 105 entnimmt. In einem nachfolgenden Schritt 310 wird das bestimmte Signal bewertet, indem es, wie oben mit Bezug auf Figur 2 beschrieben wurde, entweder parametrisch oder per Vergleich mit Schwellenwerten in eine Stärke P des Magnetfelds der Sendeeinrichtung 115 umgesetzt wird. Anschließend wird in einem Schritt 315 die Sendeeinrichtung 115 so gesteuert, dass das bereitgestellte Magnetfeld die vorbestimmte Stärke P nicht übersteigt. Danach kann das Verfahren 300 zum ersten Schritt 305 zurückkehren und erneut durchlaufen.

In einer Ausführungsform kann das bestimmte Signal S in einem Schritt 320 dazu verwendet werden, eine Kalibrierung bzw. Langzeit-Anpassung der Bewertung des Signals S durchzuführen. Dazu kann im Schritt 320 ein Maximalwert des bestimmten Signals über einen vorbestimmten Zeitraum bestimmt werden. In einem nachfolgenden Schritt 325 können Schwellenwerte S1 bis S4 aus dem bestimmten Maximalwert abgeleitet werden. Bei einer parametrischen Auswertung entsprechend des zweiten Zusammenhangs 210 kann ein Offset oder eine Skalierung des zweiten Zusammenhangs 210 auf der Basis des bestimmten Maximalwerts angepasst werden.

Die neu bestimmten Schwellenwerte bzw. die korrigierte parametrische Abbildung der Signalstärke S auf die Stärke P des Magnetfelds können dann in den Schritt 310 einfließen.

## Patentansprüche

1. Sender (105) zur drahtlosen Energieübertragung, umfassend:
- eine Sendeeinrichtung (115) mit einem Resonanztransformator (140) zur Erzeugung eines magnetischen Wechselfelds;
- eine Bestimmungseinrichtung (120) zur Bestimmung eines Signals (S) auf der Basis eines Stroms oder einer Spannung an dem Resonanztransformator (140),
- wobei das Signal (S) auf einen Gütefaktor des Resonanztransformators (140) und auf ein Objekt (155) im Einlussbereich des Resonanztransformators (140) derart hinweist, dass die Stärke des Signals (S) abhängig ist von einer Leistung, welche das Objekt (155) aus dem magnetischen Einflussbereich des Resonanztransformators (140) entnimmt,
- eine Steuereinrichtung (125) zur Steuerung des Wechselfelds auf der Basis des Signals (S),
- wobei die Steuereinrichtung (125) dazu eingerichtet ist, in Abhängigkeit des Signals (S) eine maximale Stärke (P) des Wechselfelds in wenigstens drei verschiedenen Stufen zu bestimmen;
**dadurch gekennzeichnet, dass**
- die Steuereinrichtung (125) dazu eingerichtet ist, den Resonanztransformator (140) derart anzusteuern, dass das bereitgestellte Magnetfeld die vorbestimmte Stärke (P) nicht übersteigt.

2. Sender (105) nach Anspruch 1, ferner umfassend eine mit der Steuereinrichtung (125) verbundene Speichereinrichtung (160) zur Ablage von Signalgrößen und ihnen zugeordneten Stärken (P) des Wechselfelds.

3. Sender (105) nach einem der vorangehenden Ansprüche, wobei die Stärke (P) des Wechselfelds durch eine magnetische Induktion bestimmt ist.

4. Sender (105) nach einem der vorangehenden Ansprüche, wobei die Steuereinrichtung (125) dazu eingerichtet ist, eine elektrische Leistung des Resonanztransformators (115) zu beschränken.

5. Verfahren (300) zum drahtlosen Übertragen von Energie, folgende Schritte umfassend:
- Bestimmen (305) eines Signals (S) auf der Basis eines Stroms oder einer Spannung an einem Resonanztransformator (140),
- wobei das Signal (S) auf ein Objekt (155) im Einflussbereich des Resonanztransformators (140) zur Erzeugung eines magnetischen Wechselfelds und auf einen Gütefaktor des Resonanztransformators (140) hinweist und die Stärke des Signals (S) von einer durch das Objekt (155) aufgenommenen Leistung abhängig ist, welche das Objekt (155) aus dem magnetischen Einflussbereich des Resonanztransformators (140) entnimmt,
- Bestimmen einer maximalen Stärke (P) des Wechselfelds in wenigstens drei verschiedenen Stufen auf der Basis des Signals (S) und
- Ansteuern des Resonanztransformators (140) derart, dass das bereitgestellte Magnetfeld die vorbestimmte Stärke (P) nicht übersteigt.

6. Verfahren (300) nach Anspruch 5, ferner umfassend folgende Schritte:
- Bestimmen (320) eines Maximalwerts des Signals (S) über einen vorbestimmten Zeitraum, und
- Ableiten (325) von Schwellenwerten des Signals (S) für die Stufen in Abhängigkeit vom Maximalwert des Signals (S).

7. Computerprogrammprodukt mit Programmcodemitteln zur Durchführung des Verfahrens (300) nach einem der Ansprüche 5 oder 6, wenn das Computerprogrammprodukt auf einer Verarbeitungseinrichtung (125) abläuft oder auf einem computerlesbaren Datenträger gespeichert ist.

## Claims

1. Transmitter (105) for wireless energy transmission, comprising:
- a transmitting device (115) having a resonant transformer (140) for generating an alternating magnetic field;
- a determination device (120) for determining a signal (S) on the basis of a current or a voltage at the resonant transformer (140),
- wherein the signal (S) indicates a Q factor of the resonant transformer (140) and an object (155) in the area of influence of the resonant transformer (140) in such a manner that the strength of the signal (S) is dependent on a power taken by the object (155) from the magnetic area of influence of the resonant transformer (140),
- a control device (125) for controlling the alternating field on the basis of the signal (S),
- wherein the control device (125) is set up to determine a maximum strength (P) of the alternating field in at least three different stages on the basis of the signal (S);
**characterized in that**
- the control device (125) is set up to control the resonant transformer (140) in such a manner that the magnetic field provided does not exceed the predetermined strength (P).

2. Transmitter (105) according to Claim 1, also comprising a storage device (160) which is connected to the control device (125) and is intended to store signal variables and strengths (P) of the alternating field which are assigned to said signal variables.

3. Transmitter (105) according to one of the preceding claims, wherein the strength (P) of the alternating field is determined by magnetic induction.

4. Transmitter (105) according to one of the preceding claims, wherein the control device (125) is set up to limit an electrical power of the resonant transformer (115).

5. Method (300) for wirelessly transmitting energy, comprising the following steps of:
- determining (305) a signal (S) on the basis of a current or a voltage at a resonant transformer (140),
- wherein the signal (S) indicates an object (155) in the area of influence of the resonant transformer (140) for generating an alternating magnetic field and a Q factor of the resonant transformer (140), and the strength of the signal (S) is dependent on a power which is consumed by the object (155) and is taken by the object (155) from the magnetic area of influence of the resonant transformer (140),
- determining a maximum strength (P) of the alternating field in at least three different stages on the basis of the signal (S), and
- controlling the resonant transformer (140) in such a manner that the magnetic field provided does not exceed the predetermined strength (P) .

6. Method (300) according to Claim 5, also comprising the following steps of:
- determining (320) a maximum value of the signal (S) over a predetermined period, and
- deriving (325) threshold values of the signal (S) for the stages on the basis of the maximum value of the signal (S).

7. Computer program product having program code means for carrying out the method (300) according to either of Claims 5 and 6 when the computer program product runs on a processing device (125) or is stored on a computer-readable data storage medium.

## Revendications

1. Émetteur de transmission d'énergie sans fil (105), comprenant :
- un dispositif d'émission (115) comportant un transformateur résonant (140) pour générer un champ magnétique alternatif ;
- un dispositif de détermination (120) pour déterminer un signal (S) sur la base d'un courant ou d'une tension au niveau du transformateur résonant (140),
- dans lequel le signal (S) indique un facteur de qualité du transformateur résonnant (140) et un objet (155) dans la zone d'influence du transformateur résonnant (140) de manière à ce que l'intensité du signal (S) soit fonction de la puissance absorbée par l'objet (155) dans la zone d'influence magnétique du transformateur résonnant (140),
- un dispositif de commande (125) pour commander le champ alternatif sur la base du signal (S),
- dans lequel le dispositif de commande (125) est conçu pour déterminer en fonction du signal (S) une intensité maximale (P) du champ alternatif en au moins trois stades différents ;
**caractérisé en ce que**
- le dispositif de commande (125) est conçu pour commander le transformateur résonnant (140) de manière à ce que le champ magnétique fourni ne dépasse pas l'intensité prédéterminée (P).

2. Émetteur (105) selon la revendication 1, comprenant en outre un dispositif de mémoire (160) relié au dispositif de commande (125) pour stocker des grandeurs de signal et des intensités qui leur sont associées (P) du champ alternatif.

3. Émetteur (105) selon l'une des revendications précédentes, dans lequel l'intensité (P) du champ alternatif est déterminée par une induction magnétique.

4. Émetteur (105) selon l'une des revendications précédentes, dans lequel le dispositif de commande (125) est conçu pour limiter une puissance électrique du transformateur résonant (115).

5. Procédé (300) de transmission sans fil d'énergie, comprenant les étapes consistant à :
- déterminer (305) un signal (S) sur la base d'un courant ou d'une tension au niveau d'un transformateur résonnant (140),
- dans lequel le signal (S) indique un objet (155) dans la zone d'influence du transformateur résonnant (140) pour générer un champ magnétique alternatif et un facteur de qualité du transformateur résonnant (140), et l'intensité du signal (S) est fonction d'une puissance absorbée par l'objet (155), que l'objet (155) prélève à partir de la zone d'influence magnétique du transformateur résonnant (140),
- déterminer une intensité maximale (P) du champ alternatif en au moins trois stades différents sur la base du signal (S), et
- commander le transformateur résonnant (140) de manière à ce que le champ magnétique fourni ne dépasse pas l'intensité prédéterminée (P).

6. Procédé (300) selon la revendication 5, comprenant en outre les étapes consistant à :
- déterminer (320) une valeur maximale du signal (S) au cours d'une période de temps prédéterminée, et
- dériver (325) des valeurs de seuil du signal (S) pour lesdits stades en fonction de la valeur maximale du signal (S).

7. Produit de programme d'ordinateur comportant des moyens à codes de programme pour mettre en oeuvre le procédé (300) selon l'une des revendications 5 ou 6 lorsque le produit de programme d'ordinateur est exécuté sur un dispositif de traitement (125) ou est stocké sur un support de données lisible par ordinateur.
